# EUROPEAN PATENT APPLICATION

(11) **EP 3 582 167 A1**
(43) Date of publication of application: **18.12.2019**
(21) Application number: 17896296.5
(22) Date of filing: 30.10.2017
(51) Int. Cl.: G06Q 30/02, G06Q 30/06, G06Q 40/08

(54) **INFORMATION PROCESSING DEVICE, INFORMATION PROCESSING METHOD, AND PROGRAM**

(30) Priority: 13.02.2017 JP 2017023914
(71) Applicant: Sony Mobile Communications Inc., Shinagawa-ku Tokyo 140-0002 (JP)
(72) Inventor: FURUKAWA, Ryosuke, Tokyo 140-0002 (JP)
(74) Representative: D Young & Co LLP
(86) International application number: PCT/JP2017/039132
(87) International publication number: WO 2018/146870

(57) **Abstract**

An object of the present disclosure is to more effectively provide a service or a product.

There is provided an information processing device including: an acquisition unit that acquires information regarding a characteristic of a user; and a control unit that controls provision of advertisement information of a service or a product related to the characteristic on the basis of the information regarding the characteristic of the user.

## Description

### TECHNICAL FIELD

The present disclosure relates to an information processing device, an information processing method, and a program.

### BACKGROUND ART

Various insurance services are services that compensate for damage suffered by each user with a premium collected from contracted users and generate revenue from a difference between the total amount of collected premium and the total amount of damage. Therefore, in the insurance service, it is important to allow a user who is unlikely to generate damage to subscribe to the insurance service, and it is thus useful to encourage such a user to subscribe to the insurance service.

Note that Patent Document 1 discloses a technology of estimating a risk that a user will generate damage in an automobile insurance service among various insurance services. Furthermore, Patent Document 2 and Patent Document 3 disclose a technology of providing advertisement information of various services to a user driving an automobile.

### CITATION LIST

### PATENT DOCUMENT

Patent Document 1: Japanese Patent Application Laid-Open No. 2015-225498
Patent Document 2: Japanese Patent Application Laid-Open No. 2011-198159
Patent Document 3: Japanese Patent Application Laid-Open No. 2010-39640

### SUMMARY OF THE INVENTION

### PROBLEMS TO BE SOLVED BY THE INVENTION

Here, it is difficult to effectively provide a service or a product in the existing technologies such as the above Patent Documents. For example, the technology of Patent Document 1 can estimate the risk of the damage that can be generated by the user who has subscribed to the automobile insurance service and can determine a premium on the basis of the risk, but it is not possible to select a target user to which the automobile insurance service should be provided (in other words, a user who is unlikely to generate the damage) among users who has not subscribe to the automobile insurance service. Therefore, a service provider has taken a measure such as randomly selecting the target user and providing uniform advertisement information to the target user. Furthermore, the technology of Patent Document 1 cannot measure or evaluate various characteristics of the user at the time other than the time of getting in the automobile because an evaluation (risk estimation or the like) of the user is made on the basis of only a behavior of the user at the time of getting in the automobile.

Therefore, the present disclosure has been made in view of the problem described above, and the present disclosure provides a new and improved information processing device, information processing method, and program capable of more effectively providing a service or a product.

### SOLUTIONS TO PROBLEMS

According to the present disclosure, there is provided an information processing device including: an acquisition unit that acquires information regarding a characteristic of a user; and a control unit that controls provision of advertisement information of a service or a product related to the characteristic on the basis of the information regarding the characteristic of the user.

Furthermore, according to the present disclosure, there is provided an information processing method executed by a computer, including: acquiring information regarding a characteristic of a user; and controlling provision of advertisement information of a service or a product related to the characteristic on the basis of the information regarding the characteristic of the user.

Furthermore, according to the present disclosure, there is provided a program for causing a computer to realize the following steps: acquiring information regarding a characteristic of a user; and controlling provision of advertisement information of a service or a product related to the characteristic on the basis of the information regarding the characteristic of the user.

### EFFECTS OF THE INVENTION

As described above, according to the present disclosure, it is possible to more effectively provide a service or a product.

Note that the effect described above is not necessarily restrictive, and any effect set forth in the present specification or other effects that can be grasped from the present specification may be accomplished together with or instead of the effect described above.

### BRIEF DESCRIPTION OF DRAWINGS

Fig. 1 is a view illustrating a configuration of an automobile insurance system according to an embodiment of the present disclosure.
Fig. 2 is a view illustrating a functional configuration of a server according to the present embodiment.
Fig. 3 is a view illustrating a functional configuration of a smartphone, a wearable terminal, or an in-vehicle device according to the present embodiment.
Fig. 4 is a flowchart illustrating a construction flow of an application that collects information regarding a characteristic of a user or information regarding an environment in which the user is placed by the server according to the present embodiment.
Fig. 5 is a diagram illustrating a specific example of a process of calculating a correlation between the characteristic of the user or the environment in which the user is placed and an accident.
Fig. 6 is a diagram illustrating a specific example of a process of calculating a risk factor.
Fig. 7 is a flowchart illustrating an operation of providing feedback by the server according to the present embodiment.
Fig. 8 is a flowchart illustrating a construction flow of an application that collects information regarding a characteristic of a user or information regarding an environment in which the user is placed in a case where the present disclosure is applied to a medical insurance service.
Fig. 9 is a diagram illustrating a hardware configuration of an information processing device implementing the server, the smartphone, the wearable terminal, or the in-vehicle device according to the present disclosure.

### MODE FOR CARRYING OUT THE INVENTION

Hereinafter, preferred embodiments of the present disclosure will be described in detail with reference to the accompanying drawings. Note that in the present specification and the drawings, components having substantially the same functional configuration will be denoted by the same reference numerals and an overlapping description will be omitted.

Note that a description will be given in the following order.
1. Background
2. Overview of Embodiment of Present Disclosure
3. Functional Configuration of Device
4. Operation of Device
5. Application Example
6. Hardware Configuration
7. End

### <1. Background>

The present disclosure is a technology of identifying or evaluating whether or not a customer is a good customer for various service providers or product sellers. First, in describing contents of the present disclosure, the background of the present disclosure will be described by taking an automobile insurance service as an example.

As described above, in the automobile insurance service, it is important to allow a user who is unlikely to generate damage to subscribe to the automobile insurance service, but in the existing technologies, it was difficult for a service provider to select the user who is unlikely to generate the damage by a rational method and encourage the user to subscribe to the automobile insurance service Therefore, a service provider has taken a measure such as randomly selecting the target user and providing uniform advertisement information to the target user. Therefore, a service or a product has not been sufficiently effectively provided

The present disclosers have invented the present disclosure in view of the above circumstances. The present disclosure discloses a method of identifying and evaluating whether or not a customer is a good customer for various service providers or product sellers on the basis of information regarding a characteristic of the user or information regarding an environment in which the user is placed. With such a method, the service providers or the product sellers calculate a risk that the user will generate profit or damage on the basis of the characteristic of the user or the environment in which the user is placed and provide services or products on the basis of the risk, such that it is possible to more effectively provide these services and the like.

Hereinafter, the present disclosure will be described in detail by sequentially describing an overview of an embodiment of the present disclosure, a functional configuration of a device, an operation of the device, an application example, a hardware configuration, and the like.

### <2. Overview of Embodiment of Present Disclosure>

The background of the present disclosure has been described hereinabove. Next, an outline of an embodiment of the present disclosure will be described.

The present disclosure can be applied to various services or products. In the present specification, a case where the present disclosure is applied to automobile related services (particularly, an automobile insurance service) and health related services (a medical insurance service and the like) will be described by way of example. An embodiment relating to the automobile insurance service will first be described as a configuration of the present specification, an embodiment relating to automobile related services other than the automobile insurance service will be described in "5-1. Application Example to Other Automobile Related Service", and an embodiment related to the health related services will be described in "5-2. Application Example to Health Related Service".

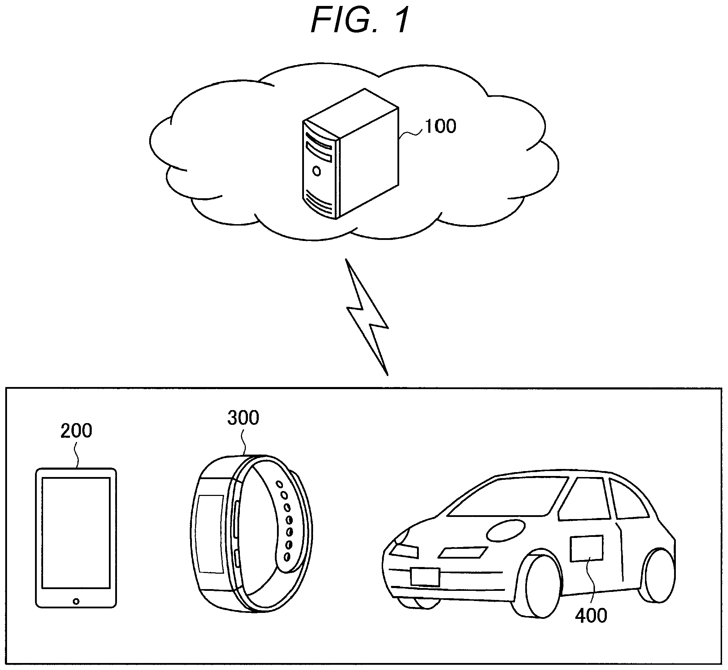

First, a configuration of an automobile insurance system that provides an automobile insurance service according to the present disclosure will be described with reference to Fig. 1. Fig. 1 is a view illustrating a configuration of an automobile insurance system according to an embodiment of the present disclosure.

As illustrated in Fig. 1, an automobile insurance system according to the present embodiment includes a server 100, a smartphone 200, a wearable terminal 300, and an in-vehicle device 400 mounted in an automobile. The smartphone 200, the wearable terminal 300, and the in-vehicle device 400 can perform wireless communication with the server 100.

The smartphone 200, the wearable terminal 300, or the in-vehicle device 400 is a device that collects information regarding a characteristic of a user (indicating, particularly, a user who has not yet subscribed to the automobile insurance service, but being not limited thereto) or information regarding an environment in which the user is placed. More specifically, a predetermined application capable of acquiring the information regarding the characteristic of the user or the information regarding the environment in which the user is placed is installed in each device of the smartphone 200, the wearable terminal 300, or the in-vehicle device 400 used by each user, such that each device can collect these pieces of information using the application. The collected information is used for evaluating the user.

As compared with a case where the evaluation of the user is performed on the basis of only a behavior of the user at the time of getting in an automobile as in the above Patent Document 1, the automobile insurance system according to the present embodiment can measure or evaluate the characteristic of the user even when the user does not get in the automobile, and can thus perform the evaluation of the user with higher accuracy. More specifically, the automobile insurance system according to the present embodiment can perform the evaluation of the user with higher accuracy by acquiring information regarding various characteristics of the user at the time other than the time of getting in the automobile from a device such as the smartphone 200 carried by the user or the wearable terminal 300 worn by the user and performing a process on the basis of these abundant information.

Here, the information regarding the characteristic of the user can include various information. For example, the information regarding the characteristic of the user can include information regarding a driving characteristic of the user, an action characteristic of the user, a physical characteristic of the user, a psychological characteristic of the user, or the like.

The information regarding the driving characteristic of the user includes, for example, history information such as sudden braking, sudden acceleration, sudden unintended acceleration, sudden steering, a sudden lane change, a frequent lane change, frequent acceleration/deceleration switching, overspeeding, and driving while performing another work (so-called "distracted driving"), a one-way traffic violation, a stopping violation, long-time midnight driving, or meandering driving. Then, these history information can include information such as the date and time, a place, a frequency, or an intensity (refers to any index value indicating the severity of each behavior) at which each behavior is performed.

Furthermore, the information regarding the action characteristic of the user can include, for example, information regarding sleep, meal, exercise, labor, drinking, smoking, bathing, moving means, or purchasing.

Furthermore, the information regarding the physical characteristic of the user can include, for example, information regarding height, weight, eyesight, hearing, blood pressure, blood components, or body fat of the user, information regarding disease (whether or not the disease is present, content of the disease, a degree of symptoms of the disease, a treatment period of the disease, and the like), information regarding physical disability, information regarding fatigue, and the like.

Furthermore, the information regarding the psychological characteristic of the user can include, for example, information regarding mental illness (whether or not mental illness is present, content of the mental illness, a degree of symptoms of the mental illness, a treatment period of the mental illness, and the like), information regarding a mental status (a degree of mental stress, or the like), and the like.

Furthermore, the information regarding the environment in which the user is placed can include various information. For example, the information regarding the environment in which the user is placed can include information regarding a road environment, geography, weather, a disaster, and the like.

The information regarding the road environment can include, for example, information regarding the number of lanes, a traffic volume (including congestion information), a speed limit, a condition of a road surface, accident history, and the like.

Furthermore, the information regarding the geography can include, for example, information regarding topography, geology, map, population, industry, and the like.

Furthermore, the information regarding the weather can include, for example, information regarding weather, temperature, humidity, rainfall (including snowfall), ultraviolet rays, an amount of cloud, a wind direction, a wind speed, barometric pressure, weather, climate, and the like.

Furthermore, the information regarding the disaster can include, for example, information regarding a storm, a heavy rain, a heavy snow, a flood, a high tide, an earthquake, a tsunami, an eruption, a fire, and the like

Note that the various information described above is only an example, and the information regarding the characteristic of the user and the information regarding the environment in which the user is placed are not limited to the various information described above.

Furthermore, a type of the smartphone 200 is optional. For example, a type or a version of an operating system (OS) installed in the smartphone 200 is optional. Moreover, although not illustrated, for example, a laptop personal computer (PC), a tablet PC, a portable music reproduction terminal, a digital camera, a digital video camera, a portable game terminal, a data logger, or the like, may be used instead of the smartphone 200.

Furthermore, a type of the wearable terminal 300 is also optional. For example, the wearable terminal 300 may be a wristwatch-type, an accessory-type (bracelet-type, necklace-type, earring-type, or the like), a glasses-type, a clothes-type device, or may be various other devices (data logger and the like) worn on a body.

Furthermore, a type of the in-vehicle device 400 is also optional. For example, the in-vehicle device 400 may be various sensors, various control devices, a drive recorder, a drive counter, a car navigation device, a data logger, or the like, and may be any other devices mounted in an automobile.

Meanwhile, the server 100 is an information processing device that controls provision of an automobile insurance service. More specifically, the server 100 acquires the information regarding the characteristic of the user or the information regarding the environment in which the user is placed from the smartphone 200, the wearable terminal 300, or the in-vehicle device 400, calculates a risk that the user will generate damage such as an accident on the basis of these pieces of information, and controls provision of feedback of an evaluation result to each user depending on the risk. Note that, as illustrated in Fig. 1, a description is provided on the assumption that the server 100 is a device provided on a network that realizes cloud computing, but the server 100 is not limited thereto. Hereinafter, a specific example of the provision of the feedback of the evaluation result to the user by the server 100 will be described in terms of a "destination of feedback", a "content of feedback", and a "provision timing of feedback".

### (Destination of Feedback)

A target user to which the feedback is to be provided is optional. For example, the server 100 may extract a user whose risk of generating the damage such as the accident is lower than a predetermined threshold value and provide the feedback only to the extracted user With this operation, the server 100 can recommend only a user whose risk of generating the damage is relatively low among users who have not yet subscribed to the automobile insurance service to subscribe to the automobile insurance service, and thus, there is a possibility that profitability or safety of the automatic insurance service can be improved.

Furthermore, a device of a destination of the feedback is also optional. For example, the server 100 may provide the feedback to the device such as the smartphone 200, the wearable terminal 300, or the in-vehicle device 400 that has acquired the information regarding the characteristic of the user or the information regarding the environment in which the user is placed.

Furthermore, the server 100 may provide the feedback to a device other than the smartphone 200 or the like. For example, the server 100 may provide the feedback to a device (for example, a PC, a tablet PC, a portable music reproduction terminal, a digital camera, a digital video camera, a portable game terminal, a television, a robot, a home appliance, or the like) possessed by the user.

Furthermore, the server 100 may provide the feedback to a device (for example, a device lent to the user by various services (an Internet cafe, a share office, and the like), a device lent to the user at a company, or the like) that is not possessed by the user. For example, in a case where the user logs in the lent device by personal authentication, the server 100 may provide the feedback to the device.

As described above, the server 100 can provide the feedback to various devices, and can thus provide the feedback more effectively. For example, the server 100 can provide the feedback to a device frequently used by the user. Furthermore, the server 100 can provide the feedback to a device that can expect a higher effect on the basis of history information regarding a response of the user to feedback provided to various devices in the past.

### (Content of Feedback)

Content of the feedback is also optional. For example, the server 100 can change content of feedback for each user. The server 100 may calculate a premium for each user on the basis of the calculated risk for the damage, and present a premium lower than those of other users to a user having a low risk or present a premium higher than those of other users to a user having a high risk. With this operation, the server 100 can encourage the user having the low risk to subscribe to the automobile insurance service and suppress the user having the high risk from subscribing to the automobile insurance service, as compared with a case where uniform feedback is provided. Furthermore, a specific premium is included in the feedback, such that it is easier for the user to consider subscribing to the automobile insurance service (or changing from another automobile insurance service). Furthermore, in a case where the user desires to subscribe to the automobile insurance service, a premium is calculated by the feedback, such that the server 100 may not calculate the premium again.

Furthermore, the server 100 may change the content of the feedback for each user on the basis of the information regarding the characteristic of the user as well as the calculated risk. For example, in a case where the server 100 recognizes that the user may drive a motorcycle as well as an automobile on the basis of the information regarding the characteristic of the user, the server 100 may provide the feedback to the user in a state where an option regarding compensation for an accident by the motorcycle is included in the feedback. With this operation, the server 100 can effectively encourage the user to subscribe to the automobile insurance service by presenting various merits generated when the user subscribes to the automobile insurance service.

Furthermore, the server 100 may change the content of the provided feedback on the basis of the response of the user to the feedback provided in the past (whether or not the user reads the feedback, whether or not the user accesses to a subscription site linked to the feedback, or the like). With this operation, the server 100 can more appropriately change a method of providing the feedback depending on a response characteristic of the user to the feedback.

Furthermore, the server 100 may provide the feedback to the user in a state where information obtained by comparing insurance contents (a premium, a guarantee content, and the like) in another automobile insurance service to which the user currently subscribes and insurance contents in the automobile insurance service provided by the automobile insurance system according to the present embodiment with each other is included in the feedback. With this operation, the server 100 can effectively encourage the user to make a change into the automobile service according to the present embodiment.

Furthermore, the server 100 may change the content of the feedback for each user on the basis of the information regarding the environment in which the user is placed as well as the calculated risk of the damage. For example, the server 100 may include a predetermined message (for example, "Please consider subscribing to an automobile insurance because traffic accidents have frequently occurred in recent years in area A") in the feedback on the basis of information regarding a route through which the user frequently passes and information regarding accident occurrence history on the route. With this operation, the server 100 can effectively encourage the user to subscribe to the automobile insurance service by presenting various merits generated when the user subscribes to the automobile insurance service depending on the environment in which the user is placed.

### (Provision Timing of Feedback)

A provision timing of the feedback is also optional. For example, the server 100 may provide the feedback on the basis of a user's intention to purchase an automobile. For example, the server 100 can recognize that the user visits an automobile dealership, browses an automobile sales site on the Internet, tries to acquire a driver's license, or the like, by analyzing the information regarding the characteristic of the user, and can thus determine whether or not the user has an intention to purchase the automobile. Then, the server 100 may provide the feedback at a timing when it is determined that the user has the intention to purchase the automobile. With this operation, the server 100 can provide the feedback before the automobile dealership proposes an automobile insurance service to the user when the user purchases the automobile, such that an effect of the feedback can be improved.

Furthermore, the server 100 may provide the feedback on the basis of the intention, of a user who has already subscribed to another automobile insurance service, to change into another automobile insurance service. For example, the server 100 can recognize that the user visits an insurance agent, browses a site introducing an automobile insurance on the Internet, or the like, by analyzing the information regarding the characteristic of the user, and can thus determine whether or not the user considers changing into another automobile insurance service. Then, the server 100 may provide the feedback at a timing when it is determined that the user considers changing to another automobile insurance service. With this operation, the server 100 can provide the feedback to a user who wants various information regarding another automobile insurance service for the purpose of changing into another automobile insurance service, and can thus improve an effect of the feedback.

In addition, the server 100 may provide the feedback at a timing when it is determined that an insurance content more advantageous for the user than the insurance content of the automobile insurance service to which the user currently subscribes can be presented. For example, the server 100 may provide the feedback at a timing when the insurance content of the automobile insurance service to which the user subscribes is changed (for example, in a case where a premium is increased), such that it is determined that the insurance content of the automobile insurance service according to the present embodiment is more advantageous for the user than that of the automobile insurance service to which the user subscribes. With this operation, the server 100 can effectively encourage the user to make a change into the automobile insurance service according to the present embodiment.

Since the above is only a specific example, the "destination of feedback", the "content of feedback", or the "provision timing of feedback" is not limited to the above example. Note that the provision of the feedback of the evaluation result is only an example, and the server 100 may control other processes related to the provision of the service. Furthermore, a case where the feedback of the evaluation result is provided as advertisement information has been described, but the feedback of the evaluation result is not limited thereto.

### <3. Functional Configuration of Device>

The outline of the embodiment of the present disclosure has been described hereinabove. Next, a functional configuration of each device according to the present embodiment will be described.

### (3-1. Functional Configuration of Server 100)

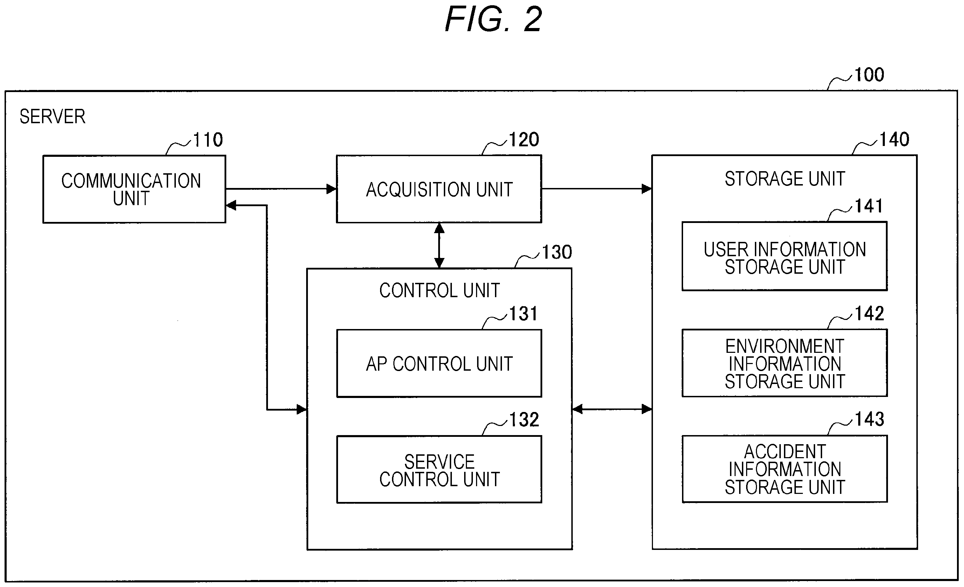

First, a functional configuration of the server 100 will be described with reference to Fig. 2. Fig. 2 is a view illustrating a functional configuration of the server 100 according to the present embodiment.

As illustrated in Fig. 2, the server 100 includes a communication unit 110, an acquisition unit 120, a control unit 130, and a storage unit 140. Furthermore, the control unit 130 includes an application processor (AP) control unit 131 and a service control unit 132, and the storage unit 140 includes a user information storage unit 141, an environment information storage unit 142, and an accident information storage unit 143.

### (Communication Unit 110)

The communication unit 110 communicates with an external device (the smartphone 200, the wearable terminal 300, the in-vehicle device 400, or the like). Describing a reception process, for example, the communication unit 110 receives the information regarding the characteristic of the user or the information regarding the environment in which the user is placed, from the smartphone 200, the wearable terminal 300, or the in-vehicle device 400, and provides these pieces of information to an acquisition unit 120 as described later.

Furthermore, describing a transmission process, for example, the communication unit 110 transmits feedback or the like (including various information related to provision of a service) generated by a service control unit 132 as described later to the smartphone 200, the wearable terminal 300, or the in-vehicle device 400. Furthermore, the communication unit 110 transmits an application generated by an AP control unit 131 as described later to the smartphone 200, the wearable terminal 300, or the in-vehicle device 400.

### (Acquisition Unit 120)

The acquisition unit 120 acquires various information. More specifically, the acquisition unit 120 acquires the information regarding the characteristic of the user or the information regarding the environment in which the user is placed, received by the communication unit 110. The acquisition unit 120 stores the acquired information in a storage unit 140 as described later.

### (Storage Unit 140)

The storage unit 140 stores the various information. For example, the storage unit 140 stores the information regarding the characteristic of the user and the information regarding the environment in which the user is placed, acquired by the acquisition unit 120, and stores information regarding an accident. As described above, the storage unit 140 includes the user information storage unit 141, the environment information storage unit 142, and the accident information storage unit 143. Hereinafter, these functional configurations will be described in detail.

### (User Information Storage Unit 141)

The user information storage unit 141 stores the information regarding the characteristic of the user. More specifically, the user information storage unit 141 stores information regarding characteristics of each of a user who has already subscribed to the automobile insurance service according to the present embodiment and a user who has not subscribed to the automobile insurance service according to the present embodiment. The information regarding the characteristic of the user is used, for example, to construct an application that collects information by an AP control unit 131 as described later or to provide feedback by a service control unit 132 as described later.

### (Environment Information Storage Unit 142)

The environment information storage unit 142 stores the information regarding the environment in which the user is placed. More specifically, the environment information storage unit 142 stores information regarding an environment in which each of the user who has already subscribed to the automobile insurance service and the user who has not subscribed to the automobile insurance service is placed. The information regarding the environment in which the user is placed is used, for example, to construct an application that collects information by an AP control unit 131 as described later or to provide feedback by a service control unit 132 as described later.

### (Accident Information Storage Unit 143)

The accident information storage unit 143 stores information regarding an accident generated by the user who has already subscribed to the automobile insurance service. Here, the information regarding the accident can include various information such as, for example, a damage content of the accident, a damage amount of the accident, the date and time or a place at which the accident occurred, and a cause of the accident Note that the information regarding the accident is not limited to these pieces of information. The information regarding the accident is used, for example, to construct an application that collects information by an AP control unit 131 as described later.

### (Control Unit 130)

The control unit 130 controls various processes of the server 100. For example, the control unit 130 generally controls the construction of the application that collects the information, the provision of the feedback, and the like (including various processes related to provision of the service). As described above, the control unit 130 includes the AP control unit 131 and the service control unit 132. Hereinafter, these functional configurations will be described in detail.

### (AP Control Unit 131)

The AP control unit 131 controls a process related to construction or update of an application installed in the smartphone 200 or the like and having an information collection function. Here, a type of the application is optional. For example, the application may be an application related to car navigation, an application related to map information (an application capable of performing route guidance and the like), an application related to a car sharing service or a rental car service (an application capable of performing reservation, payment and the like), an application related to new or used car sales (an application capable of performing product description, test ride reservation and the like), or an application related to a social networking service (SNS), and can include various other applications, but is not limited thereto. By mounting the information collection function in an application used by many users, the server 100 can acquire various information of many users, can provide feedback of evaluation results to many users, and can provide the service to many users

Note that the AP control unit 131 constructs the application so that various information is collected without impairing usability. For example, the AP control unit 131 can suppress a decrease in the usability by constructing the application so that the information collection function automatically starts, is processed in a background, and automatically ends. Furthermore, the AP control unit 131 can reduce power consumption or an occupancy ratio of a memory required for collecting the information by performing simplification of the process, elimination of a redundant process or the like. The AP control unit 131 provides the application to the smartphone 200, the wearable terminal 300, or the in-vehicle device 400 through the communication unit 110.

### (Service Control Unit 132)

The service control unit 132 controls provision of a service (or a product). More specifically, the service control unit 132 acquires the information regarding the characteristic of the user who has not yet subscribed to the automobile insurance service from the user information storage unit 141, and acquires the information regarding the environment in which the user is placed from the environment information storage unit 142. Then, the service control unit 132 calculates a value (which is any index value that can indicate a magnitude of a risk and is hereinafter referred to as a "score" for convenience) corresponding to a risk that each user will generate damage such as an accident for each user using these pieces of information.

Then, the service control unit 132 selects a target user to which the feedback is to be provided among the users who have not subscribed to the service by comparing the score of each user with a predetermined threshold value. For example, the service control unit 132 selects a user having a score lower than the predetermined threshold as the target user to which the feedback is to be provided. Then, the service control unit 132 determines content, a provision timing, a device of a destination, and the like, of the feedback, for each user to which the feedback is provided, on the basis of the calculated score, the information regarding the characteristic of the user, the information regarding the environment in which the user is placed, or the like. Thereafter, the service control unit 132 provides the feedback to a device of each user through the communication unit 110. Note that the provision of the feedback is only an example, and the service control unit 132 controls various processes related to the provision of the service.

### (3-2. Functional Configuration of Smartphone 200 or the like)

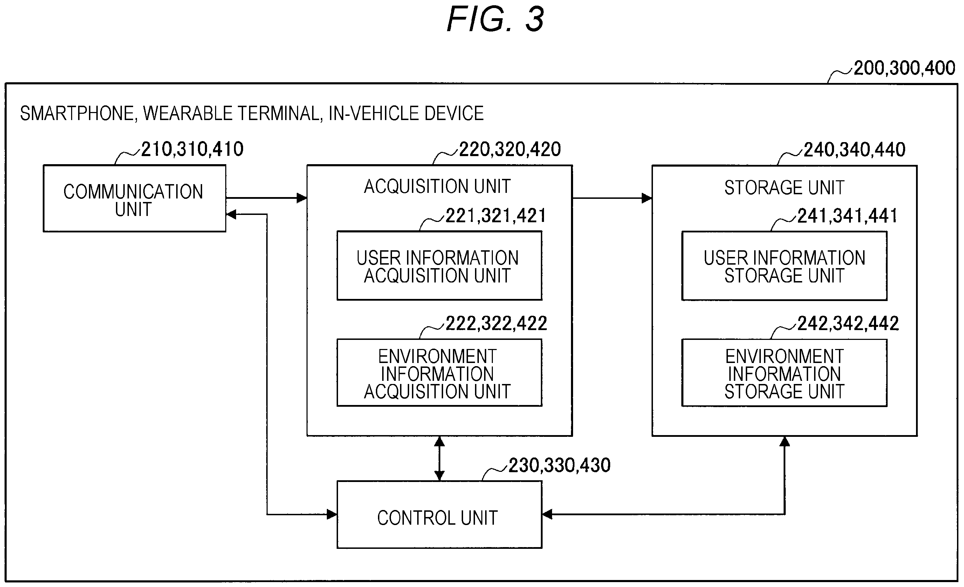

Next, a functional configuration of the smartphone 200, the wearable terminal 300, or the in-vehicle device 400 will be described with reference to Fig. 3. Fig. 3 is a view illustrating a functional configuration of the smartphone 200, the wearable terminal 300, or the in-vehicle device 400 according to the present embodiment. Note that since the smartphone 200, the wearable terminal 300, and the in-vehicle device 400 can have the same functional configuration, a functional configuration of the smartphone 200 will hereinafter be mainly described.

As illustrated in Fig. 3, the smartphone 200 includes a communication unit 210, an acquisition unit 220, a control unit 230, and a storage unit 240. Furthermore, the acquisition unit 220 includes a user information acquisition unit 221 and an environment information acquisition unit 222, and the storage unit 240 includes a user information storage unit 241 and an environment information storage unit 242.

### (Communication Unit 210)

The communication unit 210 communicates with an external device (the server 100 or the like). Describing a reception process, for example, the communication unit 210 receives the application that collects the information, the feedback, or the like (including various processes related to the provision of the service) from the server 100. Furthermore, describing a transmission process, for example, the communication unit 210 transmits the information regarding the characteristic of the user or the information regarding the environment in which the user is placed, collected by an acquisition unit 220 as described later, to the server 100. Note that although not described in detail in the present specification, the smartphone 200, the wearable terminal 300, or the in-vehicle device 400 may communicate with each other. For example, the communication unit 210 of the smartphone 200 may communicate the abovementioned application or various information with the wearable terminal 300 or the in-vehicle device 400.

### (Acquisition Unit 220)

The acquisition unit 220 acquires various information. For example, the acquisition unit 220 acquires the information regarding the characteristic of the user or the information regarding the environment in which the user is placed, and stores these pieces of information in a storage unit 240 as described later. Note that the acquisition unit 220 includes the user information acquisition unit 221 and the environment information acquisition unit 222, as described above. Hereinafter, these functional configurations will be described in detail.

### (User Information Acquisition Unit 221)

The user information acquisition unit 221 acquires the information regarding the characteristic of the user. More specifically, the user information acquisition unit 221 includes various sensors, and acquires the information regarding the characteristic of the user from these sensors.

The various sensors included in the smartphone 200 can include, for example, an acceleration sensor, a gyro sensor, a geomagnetic sensor, an atmospheric pressure sensor, a temperature sensor, a vibration sensor, an audio sensor, a heart rate sensor, a pulse wave sensor, an electroencephalogram sensor, a blood pressure sensor, a proximity sensor, an illuminance sensor, a pressure sensor, a position sensor (a global positioning system (GPS) sensor or the like), a perspiration sensor, a pH sensor, a humidity sensor, an infrared sensor, and the like. Note that the various sensors included in the smartphone 200 are not limited to the abovementioned sensors.

Furthermore, the user information acquisition unit 221 may acquire the information regarding the characteristic of the user from an external device. For example, the user information acquisition unit 221 may acquire the information regarding the characteristic of the user collected by the external device (for example, a pedometer, a PC, a music player, a digital camera, a digital video camera, a game device, a television, a robot, a home appliance, or the like) through the communication unit 210. The user information acquisition unit 221 stores the acquired information regarding the characteristic of the user in a user information storage unit 241 as described later.

### (Environment Information Acquisition Unit 222)

The environment information acquisition unit 222 acquires the information regarding the environment in which the user is placed. More specifically, the environment information acquisition unit 222 includes various sensors, similar to the user information acquisition unit 221, and acquires the information regarding the environment in which the user is placed, from these various sensors. The various sensors used by the environment information acquisition unit 222 may be the same as or may be different from those used by the user information acquisition unit 221.

Furthermore, the environment information acquisition unit 222 may acquire the information regarding the environment in which the user is placed from the external device, similar to the user information acquisition unit 221. The environment information acquisition unit 222 stores the acquired information regarding the environment in which the user is placed, in an environment information storage unit 242 as described later.

### (Storage Unit 240)

The storage unit 240 stores the various information. For example, the storage unit 240 stores the information regarding the characteristic of the user and the information regarding the environment in which the user is placed. Note that the storage unit 240 includes the user information storage unit 241 and the environment information storage unit 242, as described above. Hereinafter, these functional configurations will be described in detail.

### (User Information Storage Unit 241)

The user information storage unit 241 stores the information regarding the characteristic of the user. More specifically, the user information storage unit 241 stores the information regarding the characteristic of the user acquired by the user information acquisition unit 221. The information regarding the characteristic of the user is transmitted to, for example, the server 100, and is used for a process of providing the feedback or the like.

### (Environment Information Storage Unit 242)

The environment information storage unit 242 stores the information regarding the environment in which the user is placed. More specifically, the environment information storage unit 242 stores the information regarding the environment in which the user is placed, acquired by the environment information acquisition unit 222. The information regarding the environment in which the user is placed is transmitted to, for example, the server 100, and is used for the process of providing the feedback or the like.

### (Control Unit 230)

The control unit 230 generally controls a process of each functional configuration included in the smartphone 200. For example, the control unit 230 generally controls a process of collecting the information regarding the characteristic of the user or the information regarding the environment in which the user is placed and transmitting these pieces of information to the server 100. Note that various settings of a timing at which the control unit 230 transmits these pieces of information to the server 100, and the like, are optional. For example, the control unit 230 may control the process of transmitting these pieces of information on the basis of request information from the server 100 or may spontaneously control the process of transmitting these pieces of information. The above is only an example, and the control unit 230 generally controls various other processes in the smartphone 200.

Note that the smartphone 200, the wearable terminal 300, or the in-vehicle device 400 may include the service control unit 132 and the accident information storage unit 143 included in the server 100. In this case, the smartphone 200 or the like can perform an evaluation of the user without performing communication cooperation with the server 100. Then, the smartphone 200 or the like may be able to receive a feedback or the like based a calculated evaluation result from the server 100 by transmitting the calculated evaluation result to the server 100.

Furthermore, the smartphone 200 or the like may perform the evaluation using information of only a user who uses his/her own device. In this case, the smartphone 200 or the like may not include the accident information storage unit 143 storing information regarding accidents by a plurality of users (in other words, each device as well as the server 100 may not include the accident information storage unit 143 if accident information regarding the plurality of users is unnecessary).

### <4. Operation of Device>

The functional configuration of each device according to the present embodiment has been described hereinabove. Next, an operation of each device according to the present embodiment will be described.

### (4-1. Construction of Application)

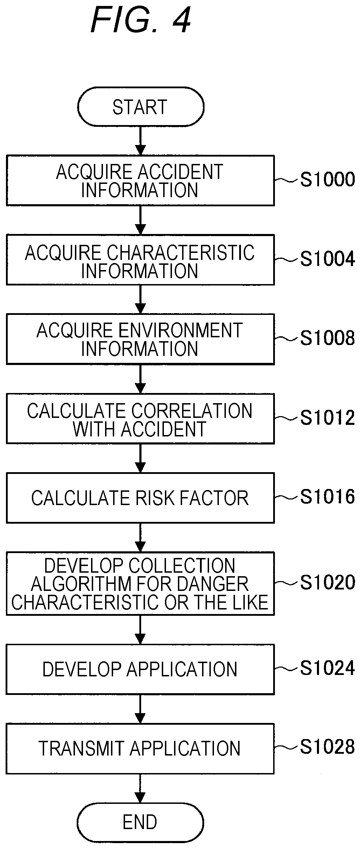

First, a construction flow of the application that collects the information will be described with reference to Figs. 4 to 6. Fig. 4 is a flowchart illustrating a construction flow of the application that collects information regarding the characteristic of the user or the information regarding the environment in which the user is placed by the server 100 according to the present embodiment.

In step S1000, the AP control unit 131 acquires the information regarding the accident from the accident information storage unit 143. In step S1004, the AP control unit 131 acquires the information regarding the characteristic of the user (described as "characteristic information" in the figure) from the user information storage unit 141. In step S1008, the AP control unit 131 acquires the information regarding the environment in which the user is placed (described as "environment information" in the figure) from the environment information storage unit 142.

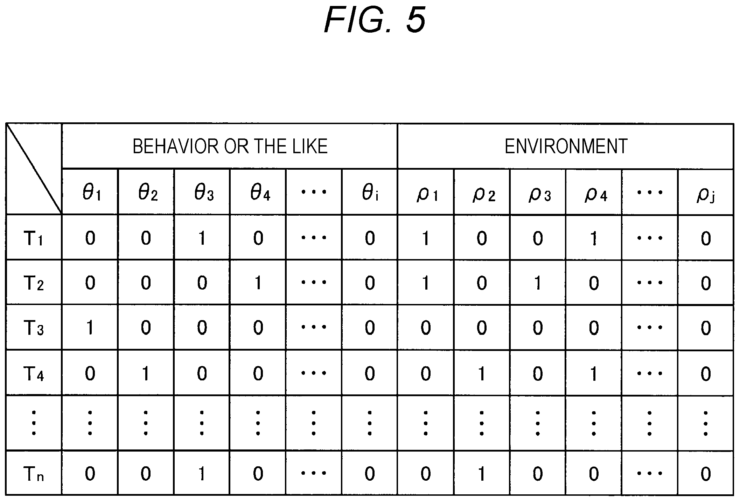

In step S1012, the AP control unit 131 calculates a correlation between the characteristic of the user or the environment in which the user is placed and the accident using the information acquired as described above. Here, a specific example of such a process will be described with reference to Fig. 5.

Fig. 5 is a diagram illustrating a specific example of a process of calculating a correlation between the characteristic of the user or the environment in which the user is placed and the accident. In a table of Fig. 5, accidents T₁ to Tₙ are listed in a vertical direction, and behaviors (various characteristics of the user as described above can be included in a horizontal direction of the table of Fig. 5, but are referred to as "behaviors" for convenience) θ₁ to θₙ of users and environments ρ₁ to ρₙ in which the user is placed are listed in the horizontal direction. Then, the AP control unit 131 adds 1 to cells of a behavior of the user or an environment in which the user is placed when each accident occurs, as illustrated in Fig. 5, on the basis of the information regarding the characteristic of the user or the information regarding the environment in which the user is placed. For example, in Fig. 5, in a case where an accident T₁ occurs, a behavior of the user is a behavior θ₃ (for example, a "sudden lane change" or the like) and an environment in which the user is placed is an environment ρ₁ and an environment ρ₄ (for example, "rainy weather", "traffic congestion" and the like), the AP control unit 131 adds 1 to cells of the behavior θ₃, the environment ρ₁, and the environment ρ₄. The AP control unit 131 can calculate the correlation between the behavior (in other words, the characteristic) of the user or the environment in which the user is placed and the accident by performing such a process on each accident.

Note that in the above example, the AP control unit 131 adds 1 to the cell of the behavior of the user or the cell of the environment in which the user is placed when the accident occurs, but is not limited thereto. For example, the AP control unit 131 may add a high value corresponding to a high correlation with the accident to a cell of a behavior of the user or a cell of an environment in which the user is placed, which is considered to have the high correlation, and add a low value corresponding to a low correlation with the accident to a cell of a behavior of the user or a cell of an environment in which the user is placed, which is considered to have the low correlation (in other words, the AP control unit 131 may perform weighting on the basis of the correlation with the accident). With this addition, the AP control unit 131 can further improve accuracy of the correlation between the behavior (in other words, the characteristic) of the user or the environment in which the user is placed and the accident.

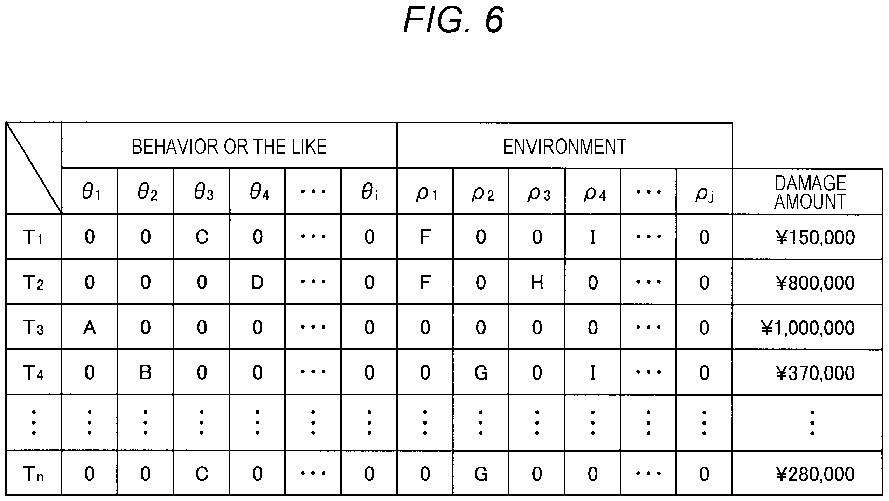

In step S1016, the AP control unit 131 calculates a risk factor of the characteristic of each user or the environment in which each user is placed. Here, the risk factor is a factor corresponding to a magnitude of the risk, which is recursively calculated on the basis of a damage amount of the accident. For example, the larger the damage amount of the accident, the larger the risk factor, and the smaller the damage amount, the smaller the risk factor. Here, an example of calculating the risk factor will be described with reference to Fig. 6.

Fig. 6 is a diagram illustrating a specific example of a process of calculating a risk factor. As illustrated in Fig. 6, the AP control unit 131 first applies information regarding the damage amount to output information (information illustrated in Fig. 5) of step 1012. Then, the AP control unit 131 calculates a factor applied to the behavior of the user or the environment in which the user is placed (in other words, the behavior or the environment to which a value of 1 or more is added in step S1012), which is considered to have a correlation with the accident, by regression calculation. For example, as illustrated in Fig. 6, "C" is calculated as a risk factor of the behavior θ₃ considered to have a correlation with the accident T₁. Similarly, "F" is calculated as a risk factor of the environment ρ₁ and "I" is calculated as a risk factor of the environment ρ₄. Note that a technology such as linear regression or multiple regression based on negative binomial distribution, log normal distribution, or the like, or a Bayesian network or cause and effect estimation may be used as a method of extracting the correlation.

In step S1020, the AP control unit 131 develops an algorithm that collects information regarding the characteristic of the user or information regarding the environment in which the user is placed (described as a "danger characteristic or the like in the figure), which has the correlation with the accident. More specifically, the AP control unit 131 develops an algorithm (including information regarding a used sensor, information regarding a pattern of sensed data to be extracted or the like) that collects information regarding the characteristic of the user or information regarding the environment in which the user is placed, of which the risk factor is calculated in step S1016.

In step S1024, the AP control unit 131 develops various applications on the basis of the algorithm (which includes an addition of an information collection function to an existing application). In step S1028, the AP control unit 131 provides the application to the smartphone 200 or the like through the communication unit 110, and the process ends. With this process, the smartphone 200 or the like can install the application to collect the information regarding the characteristic of the user or the information regarding the environment in which the user is placed.

### (4-2. Provision of Feedback)

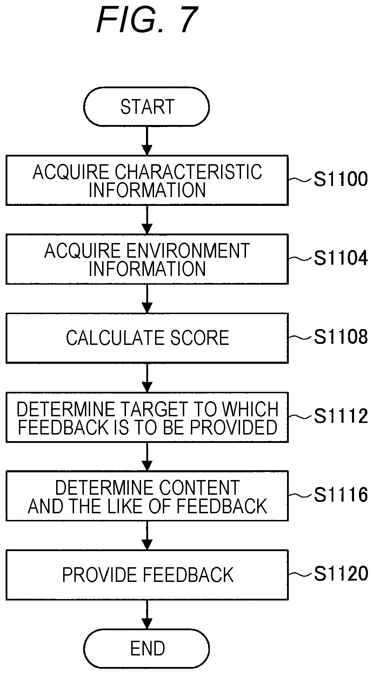

Next, an operation of providing the feedback by the server 100 according to the present embodiment will be described with reference to Fig. 7. Fig. 7 is a flowchart illustrating an operation of providing the feedback by the server 100 according to the present embodiment.

In step S1100, the service control unit 132 of the server 100 acquires the information regarding the characteristic of the user (described as "characteristic information" in the figure) from the user information storage unit 141. In step S1104, the service control unit 132 acquires the information regarding the environment in which the user is placed (described as "environment information" in the figure) from the environment information storage unit 142.

In step S1108, the service control unit 132 calculates a score, which is an index value indicating a magnitude of the risk that the user will generate damage such as an accident, on the basis of these pieces of information For example, the service control unit 132 calculates the score by applying the risk factor described with reference to Fig. 6 to the information regarding the characteristic of the user or the information regarding the environment in which the user is placed. Note that the service control unit 132 may calculate any value (expected value or the like) based on the score by performing various calculations such as multiplying the score by a generation probability and perform a subsequent processing using the calculated value.

In step S1112, the service control unit 132 selects a target user to which the feedback is to be provided among the users who have not subscribed to the automobile insurance service by comparing the score of each user with a predetermined threshold value. In step S1116, the service control unit 132 determines various parameters such as content, a provision timing, and a device of a destination of the feedback for each user to which the feedback is provided, on the basis of the calculated score, the information regarding the characteristic of the user, the information regarding the environment in which the user is placed, or the like. Then, in step S1120, the service control unit 132 provides the feedback to a device of each user through the communication unit 110, and the process ends.

### <5. Application Example>

The operation of each device according to the present embodiment has been described hereinabove. As described above, the present disclosure can be applied to various services or products. Therefore, next, an example of a case where the present disclosure is applied to services other than the automobile insurance service will be described.

### (5-1. Application Example to Other Automobile Related Services)

First, an example of a case where the present disclosure is applied to automobile related services other than the automobile insurance service will be described. For example, the present disclosure may be applied to a rental car service, a car sharing service, an automobile sales service, or the like, in addition to the automobile insurance service.

In a case where the present disclosure is applied to the rental car service or the car sharing service, the server 100 acquires information regarding a characteristic of a user or information regarding an environment in which the user is placed, from a smartphone 200 or the like of a user who has not used the rental car service or the car sharing service or a user who has used the rental car service or the car sharing service in the past. Then, the server 100 calculates a risk that the user will generate damage such as an accident on the basis of these pieces of information and controls provision of the service to each user depending on a calculation result. For example, the server 100 controls whether or not the service will be provided to the user, content of the service, or the like depending on the calculated risk.

In the rental car service or the car sharing service, when an accident occurs, there is a possibility that damage such as repair of an automobile or a decrease in the number of available automobiles will occur. By applying the present disclosure to the rental car service or the car sharing service, the server 100 can more effectively provide the service. For example, the server 100 can provide feedback or the like only to a user whose calculated risk is low or describe different service charges (including a coupon discount or the like) in the feedback depending on the calculated risk. With this operation, the server 100 can attract users with low risk and can present service charges commensurate with the risk.

Next, a case where the present disclosure is applied to a used car purchase service will be described. The server 100 calculates a risk that a user will generate damage such as an accident and controls whether or not the service will be provided to each user, content of the service, or the like depending on a calculation result, by a method similar to that described above.

In a case where an automobile is damaged by an accident, it is difficult to restore the automobile to a state before the accident even though the automobile is repaired, or the like. Furthermore, in a case where the user tends to dangerously drive an automobile even though an accident does not occur, a degree of deterioration of the automobile may be severer than that in a case where the user tends to safely drive the automobile. In a case where it is difficult to determine the deterioration of the automobile due to such an accident or dangerous driving with the naked eyes, it is difficult to make a proper assessment.

The present disclosure is applied to the used car purchase service, such that the server 100 can provide feedback or the like in which an intention to purchase a used car at a high price is described only to a user having a low risk or estimate the degree of deterioration of the automobile on the basis of the risk and describe different purchase amounts in the feedback on the basis of an estimation result. With this operation, the server 100 can create a situation where it is easy to purchase a used car having a good state or can present an appropriate purchase amount to the user depending on deterioration of the used car (particularly, deterioration that is difficult to determine with the naked eyes).

As described above, the present disclosure is applied to the automobile related service, such that the characteristic of the user is measured or evaluated even when the user does not get in the automobile, and the evaluation of the user can thus be performed with high accuracy. More specifically, the server 100 acquires various information from the device such as the smartphone 200 carried by the user or the wearable terminal 300 worn by the user and performs the process on the basis of these abundant information, such that the evaluation of the user can be performed with higher accuracy than that of the above Patent Document 1 in which the process is performed on the basis of only the behavior of the user when the user gets in the automobile.

### (5-2. Application Example to Health Related Services)

The example of the case where the present disclosure is applied to the automobile related services other than the automobile insurance service has been described hereinabove. Here, since the process can also be performed using the information acquired from various devices such as the smartphone 200 carried by the user or the wearable terminal 300 worn by the user in the present disclosure unlike the technology of the above Patent Document 1 and the like, the present disclosure can also be applied to services other than the automobile related services. Therefore, next, an example of a case where the present disclosure is applied to health related services will be described. For example, the present disclosure may be applied to various insurance services (including medical insurance (including cancer insurance and accident insurance), life insurance, income indemnity insurance, long-term care insurance, educational endowment insurance, and the like), a health promotion food sales service, a health promotion facility provision service (including a fitness club, a sports club, a sports gym, and the like) as the health related services.

First, an example in which the present disclosure is applied to various insurance services other than automobile insurance services will be described. Hereinafter, an example in which the present disclosure is applied to a medical insurance service will be mainly described.

In a case where the present disclosure is applied to a medical insurance service, in the view illustrating the functional configuration of Fig. 2, the server 100 includes a disease information storage unit 143 instead of the accident information storage unit 143.

The disease information storage unit 143 is a functional configuration that stores information regarding a disease, and stores various information such as a treatment cost of the disease, a treatment method of the disease, a treatment period of the disease, a cause of the disease, and the like. Note that the information regarding the disease is not limited to these pieces of information.

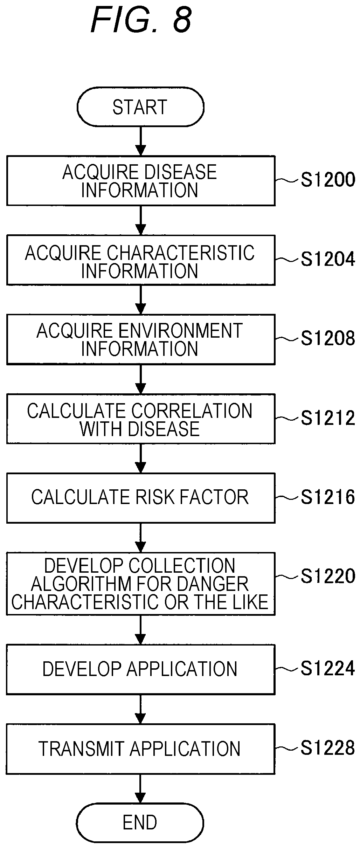

Furthermore, the AP control unit 131 controls a process related to construction or update of an application that collects information on the basis of the information regarding the disease. Here, a construction flow of the application by the AP control unit 131 will be described with reference to Fig. 8. Fig. 8 is a flowchart illustrating a construction flow of an application that collects information regarding a characteristic of a user or information regarding an environment in which the user is placed in a case where the present disclosure is applied to the medical insurance service.

In step S1200, the AP control unit 131 acquires the information regarding the disease from the disease information storage unit 143. In step S1204, the AP control unit 131 acquires the information regarding the characteristic of the user (described as "characteristic information" in Fig. 8) from the user information storage unit 141. In step S1208, the AP control unit 131 acquires the information regarding the environment in which the user is placed (described as "environment information" in Fig. 8) from the environment information storage unit 142.

In step S1212, the AP control unit 131 calculates a correlation between the characteristic of the user or the environment in which the user is placed and the disease using the information acquired as described above, and in step S1216, the AP control unit 131 calculates a risk factor of each characteristic or each environment. A method of calculating the correlation can be similar to the method described with reference to Fig. 5 and a method of calculating the risk factor can be similar to the method described with reference to Fig. 6, and a description of these methods is thus omitted.

Thereafter, in step S1220, the AP control unit 131 develops an algorithm that collects information regarding the characteristic of the user or information regarding the environment in which the user is placed (described as a "danger characteristic or the like" in the figure), which has the correlation with the disease, and in step S1224, the AP control unit 131 develops various applications on the basis of the algorithm. Finally, in step S1228, the AP control unit 131 provides the application to the smartphone 200 or the like through the communication unit 110, and the process ends.

Then, describing an operation of providing feedback, the service control unit 132 of the server 100 calculates a score, which is an index value indicating a magnitude of a risk such as a treatment cost generated by the disease, on the basis of the information regarding the characteristic of the user or the information regarding the environment in which the user is placed. Then, the service control unit 132 selects a target user to which the feedback is to be provided among users who have not subscribed to the medical insurance service by comparing the score of each user with a predetermined threshold value. Furthermore, similar to that described above, the service control unit 132 controls whether or not the service will be provided, content of the service, or the like, for each user on the basis of the calculated score, the information regarding the characteristic of the user, the information regarding the environment in which the user is placed, or the like. With this operation, the server 100 according to the present embodiment can more effectively provide the service, similar to the automobile insurance service.

Next, a case where the present disclosure is applied to other health related services, for example, a health promotion food sales service or a health promotion facility provision service will be described. The server 100 according to the present embodiment may provide, for example, feedback, a coupon or the like of health promotion food or a health promotion facility to users whose risk such as the treatment cost generated by the disease is large. With this operation, the server 100 can accurately provide the feedback to a user who has a high need for health promotion, and can thus provide the service more effectively. Note that the server 100 may take action as described above against users whose risk such as the treatment cost generated by the disease is low. The reason is that a user who is conscious of health promotion at ordinary times can be included among the users whose risk such as the treatment cost generated by the disease is low.

As described above, the present disclosure is applied to the health related services, such that the evaluation of the user can be performed with higher accuracy. More specifically, the server 100 can perform the evaluation of the user with higher accuracy by acquiring various information from the device such as the smartphone 200 carried by the user or the wearable terminal 300 worn by the user and performing a process on the basis of these abundant information.

### <6. Hardware Configuration>

The embodiments of the present disclosure have been described hereinabove. The various processes described above are realized by cooperation between software and hardware described below.

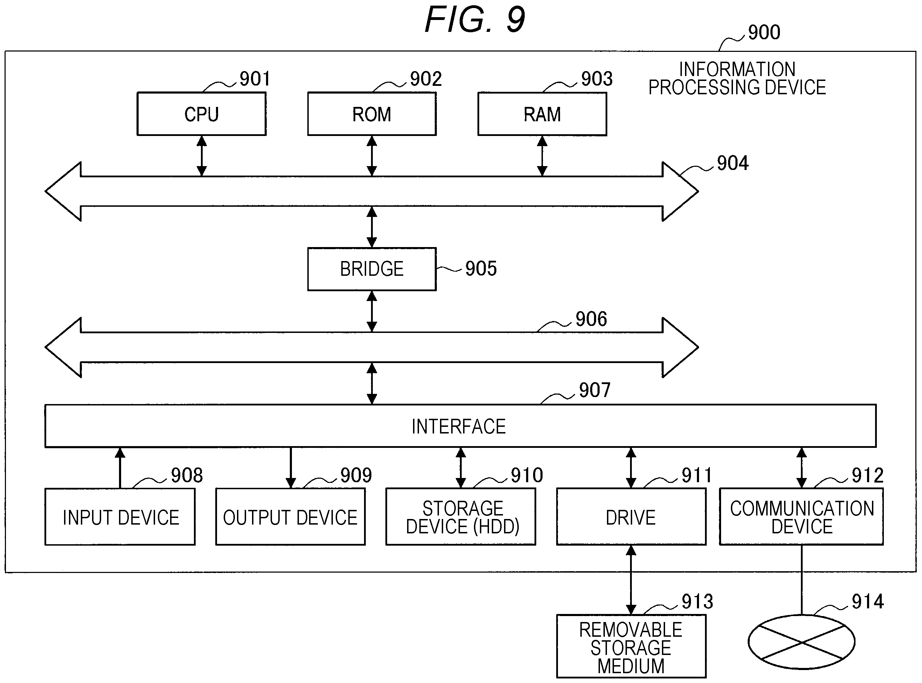

Fig. 9 is a diagram illustrating a hardware configuration of an information processing device 900 implementing the server 100, the smartphone 200, the wearable terminal 300, or the in-vehicle device 400 according to the present disclosure. The information processing device 900 includes a central processing unit (CPU) 901, a read only memory (ROM) 902, a random access memory (RAM) 903, and a host bus 904. Furthermore, the information processing device 900 further includes a bridge 905, an external bus 906, an interface 907, an input device 908, an output device 909, a storage device (hard disk drive (HDD)) 910, a drive 911, and a communication device 912.

The CPU 901 functions as an arithmetic processing unit and a control unit, and generally controls an operation in the information processing device 900 according to various programs. Furthermore, the CPU 901 may be a microprocessor. The ROM 902 stores programs, calculation parameters, or the like used by the CPU 901. The RAM 903 temporarily stores programs used in execution of the CPU 901, parameters appropriately changed in the execution, or the like. The CPU 901, the ROM 902, and the RAM 903 are connected to each other by the host bus 904 including a CPU bus and the like. Functions of the acquisition unit 120 and the control unit 130 of the server 100 may be realized by cooperation of the CPU 901, the ROM 902, and the RAM 903 (the smartphone 200, the wearable terminal 300, and the in-vehicle device 400 are also similar).

The host bus 904 is connected to the external bus 906 such as a peripheral component interconnect/interface (PCI) bus through the bridge 905. Note that the host bus 904, the bridge 905, and the external bus 906 need not to be separately configured, and functions of the host bus 904, the bridge 905, and the external bus 906 may be implemented on a single bus.

The input device 908 includes input means through which a user inputs information, such as a touch panel, a button, a microphone, and a switch, an input control circuit generating an input signal on the basis of an input by the user and outputting the generated input signal to the CPU 901, and the like. The user of the information processing device 900 can input various data to the information processing device 900 and instruct the information processing device 900 to perform a processing operation by operating the input device 908.

The output device 909 includes, for example, a display device such as a cathode ray tube (CRT) display device, a liquid crystal display (LCD) device, an organic light emitting diode (OLED) device, a lamp, and the like. Moreover, the output device 909 includes an audio output device such as a speaker and a headphone. The output device 909 outputs, for example, a reproduced content. Specifically, the display device displays various information such as reproduced video data as a text or an image. On the other hand, the audio output device converts reproduced audio data or the like into an audio and outputs the audio.

The storage device 910 is a device for storing data. The storage device 910 may include a storage medium, a recording device recording data in the storage medium, a reading device reading data from the storage medium, a deleting device deleting data recorded in the storage medium, and the like. The storage device 910 includes, for example, a hard disk drive (HDD). The storage device 910 drives a hard disk and stores programs executed by the CPU 901 and various data. The storage device 910 can realize a function of the storage unit 140 of the server 100 (the smartphone 200, the wearable terminal 300, and the in-vehicle device 400 are also similar).

The drive 911 is a reader/ writer for the storage medium, and is externally mounted on the information processing device 900. The drive 911 reads information recorded in a removable storage medium 913 such as a mounted magnetic disk, optical disk, magneto-optical disk, or semiconductor memory, and outputs the read information to the RAM 903. Furthermore, the drive 911 can write information to the removable storage medium 913.

The communication device 912 is, for example, a communication interface including a communication device or the like for connecting to a communication network 914. The communication device 912 can realize a function of the communication unit 110 of the server 100 (the smartphone 200, the wearable terminal 300, and the in-vehicle device 400 are also similar).

### <7. End>

As described above, the present disclosure discloses the method of identifying and evaluating whether or not a customer is a good customer for various service providers or product sellers on the basis of the information regarding the characteristic of the user or the information regarding the environment in which the user is placed. With such a method, the service providers or the product sellers calculate a risk that the user will generate profit or damage on the basis of the characteristic of the user or the environment in which the user is placed and provide services or products on the basis of the risk, such that it is possible to more effectively provide these services and the like.

Furthermore, since the process can also be performed using the information acquired from various devices such as the smartphone 200 carried by the user or the wearable terminal 300 worn by the user in the present disclosure unlike the technology of the above Patent Document 1 and the like, even when the user does not get in the automobile, the characteristic of the user can be measured or evaluated, such that the evaluation of the user can be performed with higher accuracy.

Hereinabove, the preferred embodiments of the present disclosure have been described in detail with reference to the accompanying drawings, but the technical scope of the present disclosure is not limited to such embodiments. It will be apparent to those skilled in the art of the present disclosure that various modifications or alterations can be conceived within the scope of the technical idea described in the claims, and it is naturally understood that these modifications or alterations also fall within the technical scope of the present disclosure.

For example, the respective steps illustrated in each of the above flowcharts do not need to be necessarily processed in time series according to the order described as the flowchart. In other words, the respective steps may be processed in an order different from the order described as the flowchart or may be processed in parallel with each other. For example, step S1000 (the acquiring of the information regarding the accident), step S1004 (the acquiring of the information regarding the characteristic of the user) or step S1008 (the acquiring of the information regarding the characteristic of the user) of Fig. 4 may be processed in an order different from that of Fig. 4 or may be processed in parallel with each other.

Furthermore, some of the components of the server 100 can be appropriately provided in an external device. For example, the AP control unit 131 that constructs the application may be appropriately provided in the external device. Furthermore, the smartphone 200, the wearable terminal 300, or the in-vehicle device 400 is also similar.

Furthermore, some of the functions of the server 100 may be implemented by the control unit 130. For example, the control unit 130 may embody some of the functions of the communication unit 110, the acquisition unit 120, and the storage unit 140. Furthermore, the smartphone 200, the wearable terminal 300, or the in-vehicle device 400 is also similar.

Furthermore, a case where the server 100 provides the feedback or the like to the user who has not yet subscribed to the automobile insurance service, the medical insurance service or the like has been described hereinabove, but the present disclosure is not limited thereto. For example, the server 100 may appropriately provide the feedback or the like to the user who has already subscribed to the automobile insurance service or the medical insurance service.

Furthermore, a case where the smartphone 200, the wearable terminal 300, or the in-vehicle device 400 collects the information regarding the characteristic of the user or the information regarding the environment in which the user is placed and the server 100 controls the provision of the feedback on the basis of these pieces of information has been described hereinabove However, sharing of various processes may be appropriately changed. For example, the smartphone 200, the wearable terminal 300, or the in-vehicle device 400 may perform some of the processes of controlling the provision of the feedback, and the server 100 may perform some of the processes of collecting the information regarding the characteristic of the user or the information regarding the environment in which the user is placed.

Furthermore, the effects described in the present specification are only illustrative or exemplary rather than being restrictive. That is, the technology according to the present disclosure can accomplish other effects apparent to those skilled in the art from the description of the present specification, in addition to or instead of the effects described above.

Note that the following configurations also fall within the technical scope of the present disclosure.
(1) An information processing device including:
   an acquisition unit that acquires information regarding a characteristic of a user; and
   a control unit that controls provision of advertisement information of a service or a product related to the characteristic on the basis of the information regarding the characteristic of the user.
(2) The information processing device according to the above (1), in which the control unit calculates a value corresponding to a risk of the user on the basis of the information regarding the characteristic of the user, and performs the control on the basis of the value.
(3) The information processing device according to the above (2), in which the control unit determines a target user to which the advertisement information is to be provided on the basis of the value.
(4) The information processing device according to the above (3), in which the control unit controls content of the advertisement information, a device of a destination of the advertisement information, or a provision timing of the advertisement information on the basis of the information regarding the characteristic of the user.
(5) The information processing device according to any one of the above (1) to (4), in which the user is a user who has not subscribed to the service.
(6) The information processing device according to any one of the above (1) to (5), in which the service or the product is a service or a product related to an automobile.
(7) The information processing device according to the above (6), in which the service or the product is a service or a product related to any one of an automobile insurance business, a car rental business, a car sharing business, and a used car buying and selling business.
(8) The information processing device according to any one of the above (1) to (7), in which the service or the product is a service or a product related to health of the user.
(9) The information processing device according to the above (8), in which the service or the product is a service or a product related to any one of a medical insurance business, a life insurance business, a health promotion food business, and a health promotion facility business.
(10) The information processing device according to any one of the above (1) to (9), in which the information regarding the characteristic of the user includes information regarding a driving characteristic of the user, information regarding an action characteristic of the user, information regarding a physical characteristic of the user, or information regarding a psychological characteristic of the user.
(11) The information processing device according to any one of the above (1) to (10), in which the acquisition unit also acquires information regarding an environment in which the user is placed, and
   the control unit performs the control also on the basis of the information regarding the environment.
(12) The information processing device according to the above (11), in which the information regarding the environment in which the user is placed includes information regarding a road environment, information regarding geography, information regarding weather, or information regarding a disaster.
(13) The information processing device according to the above (11) or (12), in which the acquisition unit acquires the information regarding the characteristic of the user or the information regarding the environment in which the user is placed, provided from a user terminal used by the user.
(14) An information processing method executed by a computer, including:
   acquiring information regarding a characteristic of a user; and
   controlling provision of advertisement information of a service or a product related to the characteristic on the basis of the information regarding the characteristic of the user.
(15) A program for causing a computer to realize:
   acquiring information regarding a characteristic of a user; and
   controlling provision of advertisement information of a service or a product related to the characteristic on the basis of the information regarding the characteristic of the user.

### REFERENCE SIGNS LIST

- 100: Server
- 110: Communication unit
- 120: Acquisition unit
- 130: Control unit
- 131: AP control unit
- 132: Service control unit
- 140: Storage unit
- 141: User information storage unit
- 142: Environment information storage unit
- 143: Accident information storage unit
- 200: Smartphone
- 300: Wearable terminal
- 400: In-vehicle device
- 210, 310, 410: Communication unit
- 220, 320, 420: Acquisition unit
- 221, 321, 421: User information acquisition unit
- 222, 322, 422: Environment information acquisition unit
- 230, 330, 430: Control unit
- 240, 340, 440: Storage unit
- 241, 341, 441: User information storage unit
- 242, 342, 442: Environment information storage unit

## Claims

1. An information processing device comprising:
an acquisition unit that acquires information regarding a characteristic of a user; and
a control unit that controls provision of advertisement information of a service or a product related to the characteristic on a basis of the information regarding the characteristic of the user.

2. The information processing device according to claim 1, wherein the control unit calculates a value corresponding to a risk of the user on the basis of the information regarding the characteristic of the user, and performs the control on a basis of the value.

3. The information processing device according to claim 2, wherein the control unit determines a target user to which the advertisement information is to be provided on the basis of the value.

4. The information processing device according to claim 3, wherein the control unit controls content of the advertisement information, a device of a destination of the advertisement information, or a provision timing of the advertisement information on the basis of the information regarding the characteristic of the user.

5. The information processing device according to claim 1, wherein the user is a user who has not subscribed to the service.

6. The information processing device according to claim 1, wherein the service or the product is a service or a product related to an automobile.

7. The information processing device according to claim 6, wherein the service or the product is a service or a product related to any one of an automobile insurance business, a car rental business, a car sharing business, and a used car buying and selling business.

8. The information processing device according to claim 1, wherein the service or the product is a service or a product related to health of the user.

9. The information processing device according to claim 8, wherein the service or the product is a service or a product related to any one of a medical insurance business, a life insurance business, a health promotion food business, and a health promotion facility business.

10. The information processing device according to claim 1, wherein the information regarding the characteristic of the user includes information regarding a driving characteristic of the user, information regarding an action characteristic of the user, information regarding a physical characteristic of the user, or information regarding a psychological characteristic of the user.

11. The information processing device according to claim 1, wherein the acquisition unit also acquires information regarding an environment in which the user is placed, and
the control unit performs the control also on a basis of the information regarding the environment.

12. The information processing device according to claim 11, wherein the information regarding the environment in which the user is placed includes information regarding a road environment, information regarding geography, information regarding weather, or information regarding a disaster.

13. The information processing device according to claim 11, wherein the acquisition unit acquires the information regarding the characteristic of the user or the information regarding the environment in which the user is placed, provided from a user terminal used by the user.

14. An information processing method executed by a computer, comprising:
acquiring information regarding a characteristic of a user; and
controlling provision of advertisement information of a service or a product related to the characteristic on a basis of the information regarding the characteristic of the user.

15. A program for causing a computer to realize:
acquiring information regarding a characteristic of a user; and
controlling provision of advertisement information of a service or a product related to the characteristic on a basis of the information regarding the characteristic of the user.
